# EUROPÄISCHE PATENTSCHRIFT

(11) **EP 4 123 205 B1**
(45) Veröffentlichungstag und Bekanntmachung des Hinweises auf die Patenterteilung: **04.06.2025**
(21) Anmeldenummer: 22184755.1
(22) Anmeldetag: 13.07.2022
(51) Int. Cl.: F16L 5/04, H02G 3/22, F16L 5/14

(54) **LEITUNGSDURCHFÜHRUNG**
CABLE FEEDTHROUGH
PASSAGE DE CONDUITE

(30) Priorität: 19.07.2021 DE 102021118595
(43) Veröffentlichungstag der Anmeldung: 25.01.2023
(73) Patentinhaber: Kaiser GmbH & Co. KG, 58579 Schalksmühle (DE)
(72) Erfinder: Glörfeld, Maik, 58515 Lüdenscheid (DE); Boecker, Jörg, 58769 Nachrodt-Wiblingwerde (DE); Viola, Marc, 58339 Breckerfeld (DE)
(74) Vertreter: Rentsch Partner AG

(56) Entgegenhaltungen:
- EP-B1- 1 404 999
- DE-A1- 10 126 998
- DE-A1- 102019 200 074
- DE-A1- 3 818 892
- NL-C2- 1 023 687

## Beschreibung

Die vorliegende Erfindung betrifft eine Leitungsdurchführung, insbesondere eine Brandschutzleitungsdurchführung, zum Durchführen mindestens einer Leitung durch eine Wand.

Aus dem Stand der Technik sind verschiedene Leitungsdurchführungen bekannt. Ein Beispiel ist die 2011 veröffentlichte US201 1088342**.** Diese beschreibt eine Leitungsdurchführung, mit einer ersten und einer zweiten Halbschale. In den jeweiligen Halbschalen befindet sich ein geteilter Einsatz aus Schaumstoff. Die Halbschalen sind aussen mit Widerhaken versehen, um ihre Montage in der Wand zu erleichtern. Der Schaumstoff kann intumeszierend sein.

DE10126998A1 offenbart eine Vorrichtung zum Durchführen von Installationselementen, wie Leitungen, durch Öffnungen in Gebäudewänden und -decken, mit mindestens einem äusseren Mantelelement, mindestens einem inneren Wandelement und mindestens einem zwischen dem Mantelelement und dem inneren Wandelement angeordneten Blähdruckmittel-Element.

Derartige aus dem Stand der Technik bekannte Leitungsdurchführungen haben den Nachteil, dass diese nicht verlässlich gegen Rauch abdichten. Ebenfalls eignen sich derartige Leitungsdurchführungen nur bedingt für Anwendungen mit starken Vibrationen und/oder Schall.

Eine Aufgabe der Erfindung besteht darin eine Leitungsdurchführung bereitzustellen, welche mindestens einen der genannten Nachteile des Standes der Technik verbessert.

Die Leitungsdurchführung gemäss der Erfindung dient zum Durchführen mindestens einer Leitung durch eine Wand. Insbesondere eignet sich die erfindungsgemässe Leitungsdurchführung für Wände in Fahrzeugen, wie beispielsweise in Schiffen oder Schienenverkehrsfahrzeugen. Bei diesen Anwendungen sind in der Regel erhöhte Erfordernisse an den Schallschutz nötig. Weiterhin erschweren oftmals Vibrationen, zum Beispiel hervorgerufen durch den Schiffsmotor, die verlässliche Abdichtung der durchgeführten Leitung z.B. gegen Rauch. Ebenfalls sind derartige Wände häufig aus Metall und weisen scharfkantige Kanten an der Wandöffnung auf, welche die im montierten Zustand der Leitungsdurchführung eingeführte(n) Leitung(en) beschädigen können. Unter einer Leitung ist im Kontext dieser Anmeldung beispielsweise eine elektrische Leitung (wie ein Kabel oder ein Draht), ein Installationsrohr, ein Schlauch, eine optische Leitung (wie Lichtleiter) oder ähnliches gemeint.

Die erfindungsgemässe Leitungsdurchführung umfasst ein Gehäuse und einen innerhalb des Gehäuses angeordneten Einsatz. Das Gehäuse umfasst hierbei eine sich in eine axiale Richtung von einem vorderseitigen Ende zu einem rückseitigen Ende erstreckende röhrenförmige Aussenschale. Unter röhrenförmig werden hierbei kreisförmige als auch eckige Querschnitte der Aussenschale verstanden. An dem vorderseitigen Ende kann ein seitlich von der Aussenschale abragender Rand des Gehäuses zur Auflage an der Wand angeordnet sein. Der Rand verhindert so, dass die Leitungsdurchführung durch die Wandöffnung in diese hineinrutscht und/oder schützt die Leitung vor scharfen Kanten an der Wandöffnung. Der innerhalb des Gehäuses angeordnete Einsatz kann integral mit dem Gehäuse ausgestaltet sein (z.B. kann dieser innen an die Aussenschale angeformt sein) oder separat von dem Gehäuse ausgestaltet sein. Bei einer integralen Ausgestaltung kann die Leitungsdurchführung ein Spritzgussteil aus zwei unterschiedlichen Spritzgussmaterialien sein. Hierbei bietet sich für das Gehäuse ein Hartplastikmaterial und/oder für den Einsatz zumindest bereichsweise ein intumeszierendes und/oder weichelastisches Material an. Bei einer separaten Ausgestaltung des Einsatzes von dem Gehäuse, kann der Einsatz mit dem Gehäuse z.B. stoffschlüssig (z.B. verklebt) und/oder formschlüssig verbunden werden. Das Gehäuse kann hierbei Hartplastik und/oder Metall umfassen. Der Einsatz kann in diesem Fall ebenfalls bereichsweise ein intumeszierendes und/oder weichelastisches Material umfassen.

Wenn der Einsatz zumindest bereichsweise ein intumeszierendes Material umfasst, kann auch allgemein von einer Brandschutzleitungsdurchführung anstatt einer Leitungsdurchführung gesprochen werden. Mit Vorteil umfasst dann der gesamte Einsatz das intumeszierende Material. Ein weichelastisches und intumeszierendes Material ist jedoch besonders vorteilhaft, da rein intumeszierende Materialen häufig spröde sind und das Abdichten von Leitungen im Normalbetrieb (kein Brandfall) nur schwer erzieht werden kann.

Erfindungsgemäss umfasst der Einsatz weiter mindestens eine Dichtmembran mit (je) einer Durchführöffnung zum Durchführen einer jeweiligen Leitung. Die Durchführöffnung erstreckt sich ebenfalls in die axiale Richtung. Die Dichtmembran umgibt somit jeweils die Durchführöffnung. Mit Vorteil ist die jeweilige Dichtmembran derart ausgelegt, dass sich die entsprechende Durchführöffnung flexibel an den jeweiligen Leitungsdurchmesser der eingeführten Leitung anpasst. Hierzu kann die Durchführöffnung z.B. aufweitbar sein. Dies kann erreicht werden durch eine geeignete Wahl des Materials des Einsatzes (z.B. durch ein weichelastisches Material) und/oder durch eine Wahl einer geeigneten Materialdicke der Dichtmembran.

Je nach Anwendung kann für eine weitere Verbesserung der Anpassung an den jeweiligen Leitungsdurchmesser (insbesondere an besonders grosse Leitungsdurchmesser) die jeweilige Dichtmembran mehrere zu der entsprechenden Durchführöffnung hinlaufende Dünnstellen aufweisen. Die Dünnstellen sind hierbei derart ausgelegt, dass diese in Abhängigkeit des Leitungsdurchmessers der eingeführten Leitung einreissen. Die mehreren Dünnstellen können dabei auf einer Vorderseite und/oder eine Rückseite der Dichtmembran angeordnet sein. (Die Rückseite der Dichtmembran zeigt hierbei in Richtung des rückseitigen Endes des Gehäuses.) Vorteilhafterweise sind die mehreren Dünnstellen derart angeordnet, dass diese die jeweilige Dichtmembran in mehrere Lamellen unterteilt. In einem eingeführten Zustand der Leitung dienen die Lamellen zum Anschmiegen an die eingeführte Leitung und Abdichten derselben. Die Lamellen sind daher vorzugsweise elastisch verformbar. Hierzu bietet sich u.a. eine dreieckige oder trapezförmige Form der jeweiligen Lamellen an. Um die Verformung der Dichtmembran, respektive der Lamellen weiter zu verbessern, kann neben der jeweiligen Dichtmembran (z.B. an der weiter unten beschriebenen Innenschale) eine umlaufende Kerbe angeordnet sein.

Die jeweilige Dichtmembran kann weiterhin im Wesentlichen normal zur axialen Richtung ausgerichtet sein oder in die axiale Richtung trichterförmig oder konisch ausgestaltet sein. Für eine gute Durchführbarkeit und Abdichtung der Leitung verjüngt sich der Querschnitt der konischen oder trichterförmigen Dichtmembran mit Vorzug in axialer Richtung von dem vorderseitigen Ende weg. Diese Anordnung erleichtert insbesondere das vorderseitige Einführen von Leitungen in einer bereits in der Wand montierten Leitungsdurchführung. Die zuvor beschriebene Kerbe ist bei einer derartigen Ausgestaltung mit Vorteil in axialer Richtung vorderseitig (zum vorderseitigen Ende hingewandt) der Dichtmembran angeordnet. Alternativ kann sich jedoch ebenso der Querschnitt der Dichtmembran in axiale Richtung zu dem vorderseitigen Ende hin verjüngen. Die Kerbe kann dann in axialer Richtung rückseitig der Dichtmembran angeordnet sein.

Für eine universelle Abdichtung auch ohne eine eingeführte Leitung bietet sich an, die jeweilige Durchführöffnung in einem initialen Zustand (d.h. vor dem Durchführen der Leitung) von einem heraustrennbaren und/oder durchstechbaren Bereich zu verschliessen. Der heraustrennbare und/oder durchstechbare Bereich kann mindestens eine (weitere) Dünnstelle umfassen. Die mindestens eine (weitere) Dünnstelle kann zumindest bereichsweise um den heraustrennbaren Bereich umlaufen. Alternativ oder ergänzend können auch mehrere (weitere) Dünnstellen vorgesehen sein. Diese können sich beispielsweise an einer Durchstechstelle des durchstechbaren Bereichs kreuzen. Auch Kombinationen dieser Ausführungen sind denkbar (umlaufende Dünnstelle und sich kreuzende und eine Durchstechstelle ausbildende Dünnstellen).

Die mindestens eine Dichtmembran ist von einer röhrenförmigen Innenschale des Einsatzes umgeben. Von dieser kann die Dichtmembran radial nach innen abragen. Die Innenschale erstreckt sich hierbei in die axiale Richtung und zumindest bereichsweise entlang der Aussenschale des Gehäuses. Die Innenschale erstreckt sich mit Vorteil in axialer Richtung über 90 bis 100% der gesamten Länge der Aussenschale. Im Fall, dass ein intumeszierendes Material für den Einsatz verwendet wird, sorgt die Innenschale aus dem intumeszierenden Material so im Brandfall für eine grossflächige Aufschäumung und Abdichtung der Durchführöffnung(en). Bei einer Durchführöffnung für eine einzige Leitung, kann die Innenschale koaxial zur Aussenschale angeordnet sein. Sind mehrere Durchführöffnungen zum Durchführen jeweils einer Leitung vorgesehen, kann der Einsatz ebenfalls mehrere röhrenförmige Innenschalen aufweisen, welche jeweils eine entsprechende Dichtmembran umranden. Die mehreren röhrenförmigen Innenschalen können durch eine Versteifungsstruktur des Einsatzes miteinander verbunden sein. Bei einer Ausgestaltung mit mehreren Durchführöffnungen bietet es sich zudem an, dass das Gehäuse und/oder der Einsatz an dem vorderseitigen Ende eine Stirnfläche aufweisen. Von der Stirnfläche des Einsatzes können sich die

Innenschalen in die axiale Richtung zumindest bereichsweise durch die Leitungsdurchführung erstrecken. Die Stirnfläche des Gehäuses geht mit Vorteil in den zuvor beschriebenen Rand des Gehäuses über, d.h. der Rand und die Stirnfläche befinden sich an derselben Position in der axialen Richtung.

Je nach Ausgestaltung kann das Gehäuse durch die Aussenschale erstreckende Ausschnitte aufweisen. Durch die jeweiligen Ausschnitte können sich radial nach aussen ragende Klemmrippen des Einsatzes erstrecken. Die Klemmrippen können integral mit der Innenschale des Einsatzes ausgestaltet sein. Die Klemmrippen dienen dazu die Leitungsdurchführung in der Wand sicher zu positionieren und Vibrationen abzufangen. Die Ausschnitte und die Klemmrippen sind somit mit Vorteil um einen Umfang des Gehäuses verteilt angeordnet.

Für eine einfache Montage der Leitung in der Leitungsdurchführung kann diese zwei Halbschalen umfassen. Die Halbschalen sind bevorzugt miteinander entlang einer sich in die axiale Richtung erstreckenden ersten Trennebene wirkverbindbar. Die Halbschalen können jeweils eine Gehäusehälfte und eine Einsatzhälfte umfassen. Wie oben bereits beschrieben kann das Gehäuse mit dem Einsatz integral verbunden sein. Im Fall von Halbschalen, kann demnach die entsprechende Einsatzhälfte und die entsprechende Gehäusehälfte einer jeweiligen Halbschale aneinander angeformt sein. Alternativ können die entsprechenden Einsatzhälften und Gehäusehälften auch jeweils separat voneinander ausgestaltet sein. Mit Vorteil erstreckt sich die erste Trennebene mittig durch die Leitungsdurchführung. Hierbei kann sich die erste Trennebene (insbesondere mittig) durch eine, zwei oder mehrere Durchführöffnungen erstecken. Auch kann in mindestens einer der beiden Halbschalen oder in beiden Halbschalen mindestens eine weitere gänzlich in der entsprechenden Halbschale angeordnete Durchführöffnungen vorhanden sein. Für das seitliche Einbringen einer Leitung in diese Durchführöffnungen kann hierbei eine einreissbare Dünnstelle oder ein Schlitz vorgesehen sein, welcher sich von der ersten Trennebene der Halbschalen zu der jeweiligen gänzlich in dieser Halbschale angeordnete Durchführöffnungen erstreckt. Die einreissbare Dünnstelle oder der Schlitz erstreckt sich mit Vorteil senkrecht von der ersten Trennebene und in die axiale Richtung. Besonders vorteilhaft ist eine Anordnung mit zwei Durchführöffnungen, welche jeweils zur Hälfte auf einer Halbschale angeordnet sind, und einer gänzlich in der entsprechenden Halbschale angeordneten Durchführöffnung. Diese gänzlich in der Halbschale angeordnete Durchführöffnung kann einen Mittelpunkt aufweisen, der aus der axialen Richtung betrachtet zwischen den Mittelpunkten der auf der Trennebene angeordneten Durchführöffnungen angeordnet ist. Die einreissbare Dünnstelle oder Schlitz verläuft dann von der Trennebene zwischen den auf der Trennebene angeordneten Durchführöffnungen zu der entsprechend gänzlich in der Halbschale angeordneten Durchführöffnung.

Je nach Ausgestaltung, insbesondere, wenn mehr als zwei Durchführöffnungen angedacht sind, können die jeweiligen Halbschalen ebenfalls mehrteilig sein. Hierbei können die Halbschalen beispielsweise jeweils mindestens zwei Segmente umfassen. Derartige Segmente umfassen dann je einen Gehäuseteil und einen Einsatzteil, welcher bevorzugt an dem Gehäuseteil angeformt ist. Die Gehäuseteile formen zusammengesetzt das Gehäuse und die Einsatzteile formen zusammengesetzt den Einsatz. Sind pro Halbschale zwei Segmente vorgesehen, können diese weiter entlang einer sich in die axiale Richtung durch die Leitungsdurchführung erstreckenden zweiten Trennebene wirkverbindbar sein. In diesem Fall würden (im montierten Zustand) die beiden Halbschalen entlang der ersten Trennebene aneinander anliegen und die entsprechenden Segmente der beiden Halbschalen paarweise gegenüberliegend entlang der zweiten Trennebene aneinander anliegen. Bei einer derartigen Ausgestaltung bietet es sich an, wenn sich die zweite Trennebene durch mindestens eine Durchführöffnung, vorzugsweise jedoch durch eine Durchführöffnung pro Halbschale erstreckt. Die erste und die zweite Trennebene stehen mit Vorzug senkrecht aufeinander. Wenn zwei Halbschalen mit je zwei Segmenten vorhanden sind, ist es vorteilhaft, wenn die jeweiligen Segmente umfangseitig mit jedem benachbarten Segment eine Durchführöffnung ausbilden. Insgesamt liegen dann also vier Durchführöffnungen vor, durch die entweder die erste oder die zweite Trennebene verlaufen. Bei einer Ausgestaltung mit Halbschalen und ggf. Segmenten kann die Trennebene ebenfalls durch die mindestens eine Dichtmembran verlaufen. Für eine gute Abdichtung im zusammengesetzten Zustand der Leitungsdurchführung können sich die jeweiligen Teile der Dichtmembran der entsprechenden Halbschalen, bzw. wenn vorhanden der entsprechenden Segmente, überlappen.

Für eine stabile Ausführung kann die Leitungsdurchführung Wirkverbindungsmittel aufweisen, welche die Halbschalen und/oder die Segmente miteinander wirkverbindet. Mit Vorteil sind die Wirkverbindungsmittel an dem Gehäuse, insbesondere an der Aussenschale des Gehäuses angeordnet. Die Wirkverbindungsmittel können Rastelemente und/oder Klemmelemente sein. Pro Segment und/oder Habschale sind mit Vorzug an dem vorderseitigen Ende der Aussenschale als auch an dem rückseitigen Ende der Aussenschale Wirkverbindungsmittel angeordnet.

Je nach Anwendung können alternativ oder ergänzend Positionierhilfen an den Halbschalen und/oder den Segmenten vorgesehen sein. Die Positionierhilfen dienen dazu die Halbschalen und/oder die Segmente zum Wirkverbinden zueinander auszurichten.

Für eine sichere Verbindung mit der Wand können weiterhin am Rand Befestigungsmittel angeordnet sein. Die Befestigungsmittel dienen zur Befestigung der Leitungsdurchführung an der Wand. Beispielsweise können die Befestigungsmittel als im Rand angeordnete Befestigungsöffnungen ausgestaltet sein. Alternativ oder ergänzend können die Befestigungsmittel als rückseitig des Randes angeordnete (zum rückseitigen Ende hinweisend) Rasthaken ausgestaltet sein. Letzteres ist besonders für dünnwandige Metallwände geeignet.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante einer erfindungsgemässen Leitungsdurchführung in einer perspektivischen Explosionsansicht;
- Fig. 2: Die erste Variante der Leitungsdurchführung gemäss Figur 1 in einer Ansicht von vorne;
- Fig. 3: Die erste Variante der Leitungsdurchführung gemäss Figur 1 in einer Ansicht von hinten;
- Fig. 4: Ein Schnitt A -A durch die erste Variante der Leitungsdurchführung gemäss Figur 2;
- Fig. 5: Eine zweite Variante einer erfindungsgemässen Leitungsdurchführung in einer perspektivischen Explosionsansicht;
- Fig. 6: Die zweite Variante der Leitungsdurchführung gemäss Figur 5 von vorne;
- Fig. 7: Ein Schnitt B - B durch die zweite Variante der Leitungsdurchführung gemäss Figur 6;
- Fig. 8: Eine dritte Variante einer erfindungsgemässen Leitungsdurchführung in einer perspektivischen Ansicht;
- Fig. 9: Die dritte Variante der Leitungsdurchführung in einer perspektivischen Explosionsansicht;
- Fig. 10: Eine vierte Variante der Leitungsdurchführung in einer perspektivischen Ansicht.

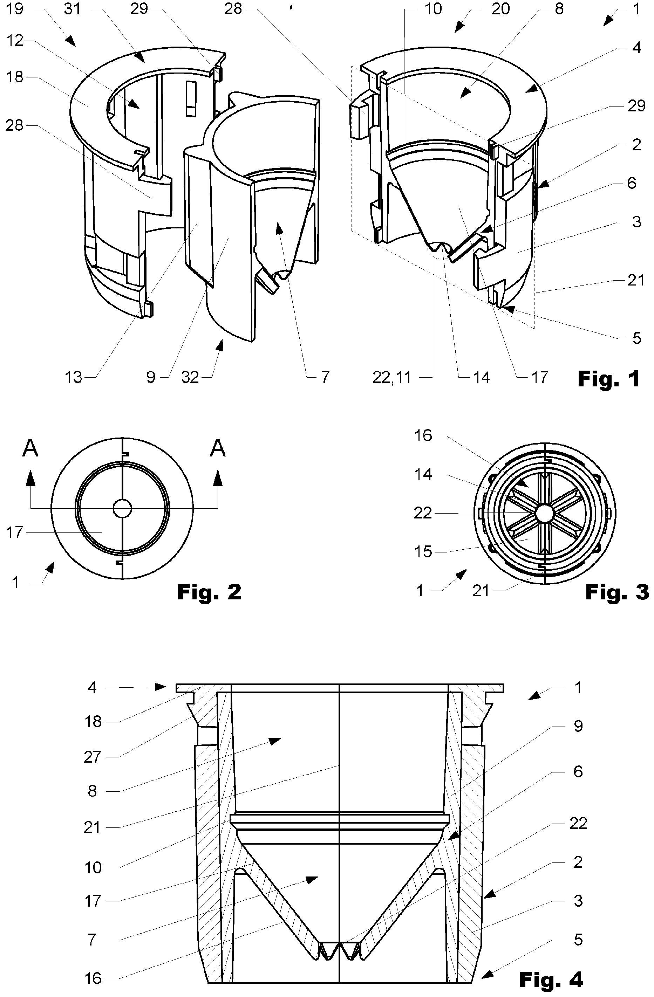

**Figur 1** bis **Figur 4** zeigen eine erste Variante einer erfindungsgemässen Leitungsdurchführung 1 zum Durchführen einer Leitung durch eine Wand. Die Leitungsdurchführung 1 umfasst ein Gehäuse 2 mit einer sich in eine axiale Richtung von einem vorderseitigen Ende 4 zu einem rückseitigen Ende 5 erstreckenden röhrenförmigen Aussenschale 3. Das Gehäuse 2 kann weiter einen an dem vorderseitigen Ende 4 seitlich von der Aussenschale 3 abragenden Rand 18 zur Auflage an der Wand umfassen. Rückseitig des Randes können ergänzend Befestigungsmittel 27 (z.B. in Form von Rasthaken) zur Befestigung der Leitungsdurchführung 1 an der Wand angeordnet sein, wie in **Figur 4** zu sehen. Innerhalb des Gehäuses 2 ist ein Einsatz 6 angeordnet, welcher ein intumeszierendes Material umfassen kann. Der Einsatz 6 kann wie gezeigt eine röhrenförmige Innenschale 9 umfassen, welche sich in die axiale Richtung und zumindest bereichsweise entlang der Aussenschale 3 des Gehäuses 2 erstreckt. In dem Einsatz ist eine Dichtmembran 7 angeordnet, welche eine Durchführöffnung 8 zum Durchführen der Leitung umgibt. Die Dichtmembran 7 ragt radial nach innen von der Innenschale 9 ab und verjüngt sich konisch in axialer Richtung von dem vorderseitigen Ende 4 weg.

Die Dichtmembran 7 ist mit Vorteil derart ausgelegt, dass die Durchführöffnung 8 aufweitbar ist und sich flexibel an einen jeweiligen Leitungsdurchmesser der eingeführten Leitung anpasst. Hierzu kann diese ein weichelastisches (und ggf. intumeszierendes) Material umfassen. Für eine gute Anpassung an besonders grosse Leitungsdurchmesser, kann die Dichtmembran 7 zudem mehrere zu der Durchführöffnung 8 hinlaufende Dünnstellen 14 aufweisen, welche derart ausgelegt sind, dass diese in Abhängigkeit eines Leitungsdurchmessers der eingeführten Leitung einreissen. Je nach Ausgestaltung können die mehreren Dünnstellen 14 beispielsweise auf einer Rückseite 16 der Dichtmembran 7 angeordnet sein, wie in **Figur 3** ersichtlich. Die mehreren Dünnstellen 14 können die sich konisch verjüngende Dichtmembran 7 in mehrere dreieckige Lamellen 15 unterteilen. Um eine Deformation der Lamellen 15 zu begünstigen, kann zudem neben der Dichtmembran 7 an der Innenschale 9 eine umlaufende Kerbe 10 angeordnet sein (vgl. **Figur 4****).**

In der ersten Variante weist die Leitungsdurchführung 1 lediglich eine Durchführöffnung 8 auf. Um auch vorkonfektionierte Leitungen, welche beispielsweise bereits einen Stecker an einem Ende montiert haben, einfach in der Leitungsdurchführung 1 montieren zu können, kann diese zwei Halbschalen 19, 20 umfassen, welche miteinander entlang einer sich in die axiale Richtung durch die Leitungsdurchführung 1 erstreckenden ersten Trennebene 21 wirkverbindbar sind (siehe **Figur 1****).** Die erste Trennebene 21 erstreckt sich durch die Durchführöffnung 8 und erlaubt im auseinandergebauten Zustand der Leitungsdurchführung 1 ein einfaches Einlegen der vorkonfektionierten Leitung in die beiden Halbschalen 19, 20.

An den jeweiligen Gehäusehälften 31 der Halbschalen 19, 20 sind im gezeigten Fall Wirkverbindungsmittel 28 in Form von Rasthaken zum Wirkverbinden der Halbschalen angeordnet. Weiterhin kann jede Halbschale 19, 20 mindestens eine Positionierhilfe 29 umfassen um die Halbschalen 19, 20 vor dem Wirkverbinden zueinander auszurichten.

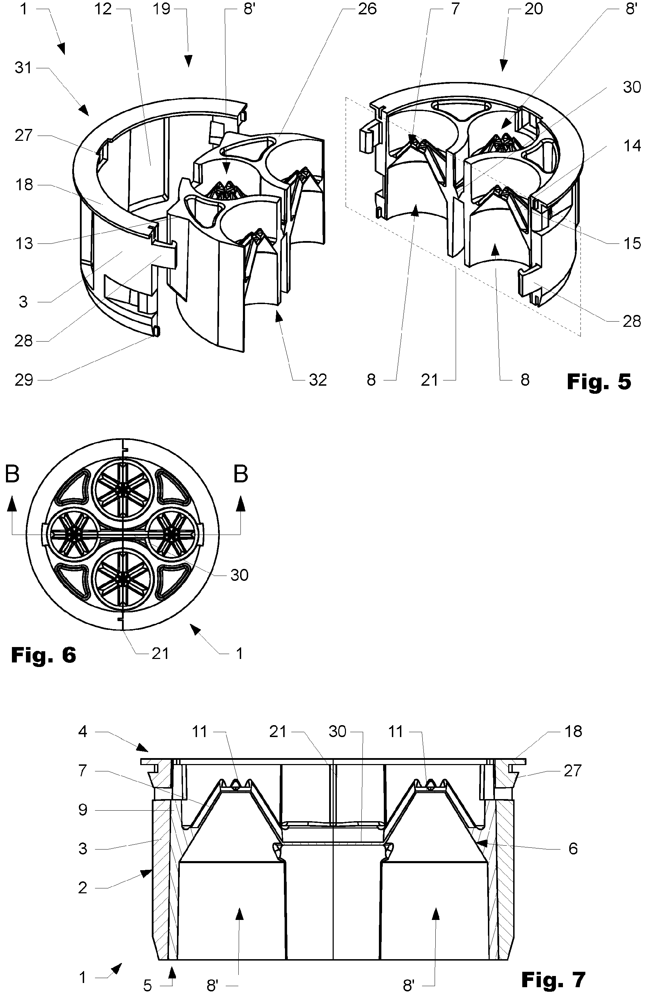

**Figur 5** bis **Figur 7** zeigen eine zweite Variante einer erfindungsgemässen Leitungsdurchführung 1. Die zweite Variante unterscheidet sich von der ersten Variante dadurch, dass diese zum Durchführen von vier Leitungen geeignet ist. Hierzu umfasst die dargestellte Leitungsdurchführung 1 vier Durchführöffnungen 8 in je einer konisch ausgeformten Dichtmembran 7. Im gezeigten Fall verjüngen sich die jeweiligen Dichtmembrane 7 in axialer Richtung zu dem vorderseitigen Ende 4 hin. Äquivalent befinden sich die mehreren zu der jeweiligen Durchführöffnung 8 hinlaufenden Dünnstellen 14 auf einer Vorderseite 17 der Dichtmembran 7, wie in **Figur 6** zu sehen.

Obwohl vier Durchführöffnungen 8, 8' vorhanden sind, weist die zweite Variante der Leitungsdurchführung 1 ebenfalls nur zwei Halbschalen 19, 20 auf, welche jeweils eine Gehäusehälfte 31 und eine Einsatzhälfte 32 umfassen. Während sich die (erste) Trennebene 21 durch zwei der vier Durchführöffnungen 8 erstreckt, ist pro Halbschalen 19, 20 noch eine gänzlich in dieser Halbschale 19, 20 angeordnete Durchführöffnungen 8' vorhanden (siehe **Figur 5****).** Auch in dieser Durchführöffnung 8' kann jedoch eine vorkonfektionierte Leitung eingebracht werden, da im vorliegenden Fall eine einreissbare Dünnstelle oder alternativ ein Schlitz 30 vorhanden ist, welcher sich von der ersten Trennebene 21 zu der jeweiligen gänzlich in dieser Halbschale 19, 20 angeordneten Durchführöffnung 8' erstreckt.

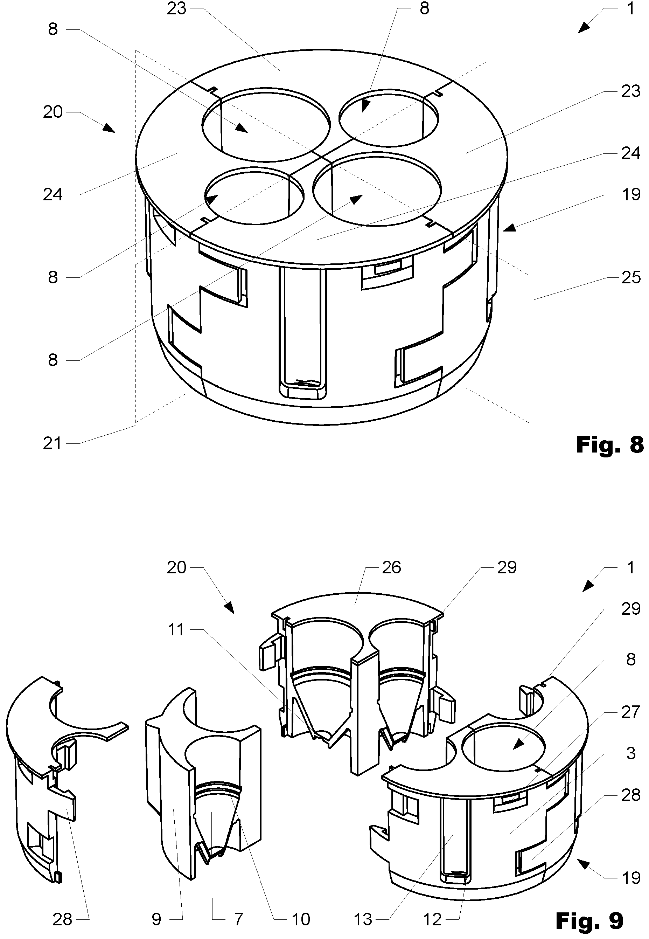

**Figur 8** und **Figur 9** zeigen eine dritte Variante einer erfindungsgemässen Leitungsdurchführung 1. Im Gegensatz zu der zweiten Variante sind bei der dritten Variante die beiden Halbschalen 19, 20 jeweils in zwei Segmente 23, 24 unterteilbar, was den Einbau der Leitungen in die jeweiligen Durchführöffnungen 8 der Leitungsdurchführung 1 erleichtert. Die Segmente 23, 24 sind wie die Halbschalen 19, 20 über Wirkverbindungsmittel 28 (hier: Rasthaken) miteinander wirkverbindbar. Hierbei liegen im montierten Zustand die beiden Halbschalen 19, 20 entlang der ersten Trennebene 21 aneinander an, wobei die entsprechenden Segmente 23, 24 der jeweiligen Halbschalen 19, 20 paarweise gegenüberliegend entlang einer zweiten Trennebene 25 aneinander anliegen (siehe **Figur 8****).** Die erste und die zweite Trennebene 21, 25 stehen im vorliegenden Beispiel senkrecht aufeinander.

Die zweite Trennebene 25 erstreckt sich wie ersichtlich durch insgesamt zwei Durchführöffnungen 8 (eine Durchführöffnung 8 pro Halbschale 19, 20). Die erste Trennebene 21 erstreckt sich ebenfalls durch insgesamt zwei Durchführöffnungen 8 (eine Durchführöffnung 8 pro Paar Segmente 23, 23 und 24,24). Insgesamt liegen dann also vier Durchführöffnungen 8 vor, durch welche jeweils mittig entweder die erste oder die zweite Trennebene 21, 25 verläuft. Wie auch bei der ersten Variante, verjüngen sich die jeweiligen konischen Dichtmembrane 7 in axialer Richtung von dem vorderseitigen Ende 4 weg.

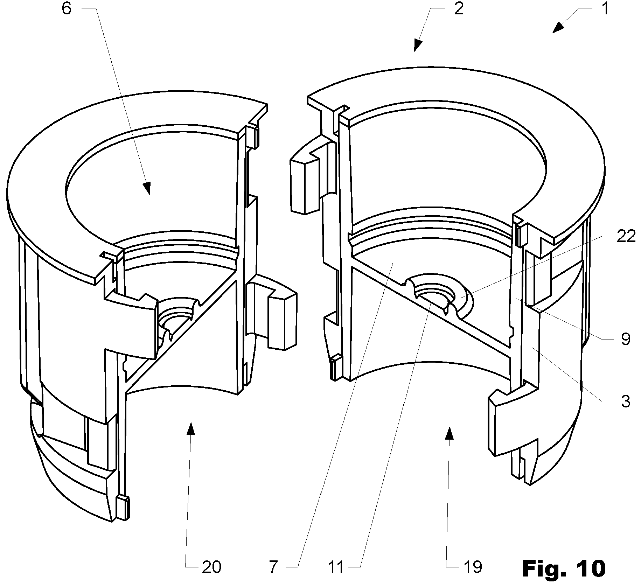

**Figur 10** zeigt eine vierte Variante einer erfindungsgemässen Leitungsdurchführung 1 zum Durchführen einer Leitung. Die vierte Variante der Leitungsdurchführung 1 ist, wie die erste Variante, zum Durchführen von lediglich einer Leitung gedacht. Die vierte Variante unterscheidet sich jedoch von der ersten Variante dadurch, dass die Dichtmembran 7 nicht konisch ausgestaltet ist, sondern diese im vorliegenden Fall im Wesentlichen normal zur axialen Richtung ausgerichtet ist.

Diese Ausgestaltung ist besonders vorteilhaft für Varianten, wo kein intumeszierendes Material verwendet wird. Mit Vorteil ist das Material des Einsatzes 6 jedoch trotzdem weichelastisch, um die Dichtmembran 7 (respektive die Durchführöffnung 8) elastisch zu deformieren um Leitungen unterschiedlicher Durchmesser einzuführen. Um ein Einreissen der Dichtmembran 7 in diesem Fall zu vermeiden kann, wie gezeigt, diese eine um die Durchführöffnung 8 umlaufende Wulst 22 aufweisen. Die Ausgestaltung des Gehäuses 2 kann hierbei äquivalent zu den zuvor beschriebenen Varianten gewählt sein.

Bei sämtlichen hier gezeigten Varianten, kann das Gehäuse 2 bereichsweise in die axiale Richtung und durch die Aussenschale 3 erstreckende Ausschnitte 12 aufweisen, durch welche sich jeweils radial nach aussen eine Klemmrippe 13 des Einsatzes 6 erstreckt. Eine derartige Ausgestaltung ist besonders bei erhöhten Vibrationen sinnvoll. Weiterhin können alle Varianten vorsehen, dass die Durchführöffnung 8 in einem initialen Zustand vor dem Durchführen der jeweiligen Leitung von einem heraustrennbaren und/oder herausstechbaren Bereich 11 verschlossen ist. Auf diese Weise verhindert die Leitungsdurchführung 1 auch im Fall, dass keine Leitung durch diese montiert ist, den Durchzug von z.B. Rauch durch die Leitungsdurchführung 1.

### LISTE DER BEZUGSZEICHEN

| | | | |
|---|---|---|---|
| 1 | Leitungsdurchführung | 17 | Vorderseite |
| 2 | Gehäuse | 18 | Rand |
| 3 | Aussenschale | 19 | Erste Halbschale |
| 4 | Vorderseitiges Ende | 20 | Zweite Halbschale |
| 5 | Rückseitiges Ende | 21 | Erste Trennebene |
| 6 | Einsatz | 22 | Wulst |
| 7 | Dichtmembran | 23 | Erstes Segment |
| 8 | Durchführöffnung | 24 | Zweites Segment |
| 9 | Innenschale | 25 | Zweite Trennebene |
| 10 | Äussere Zone | 26 | Stirnfläche |
| 11 | Durchstechbarer/ heraustrennbarer Bereich | 27 | Befestigungsmittel |
| | | 28 | Wirkverbindungsmittel |
| 12 | Ausschnitt | 29 | Positionierhilfe |
| 13 | Klemmrippe | 30 | Schlitz (oder Dünnstelle) |
| 14 | Dünnstelle | 31 | Gehäusehälfte |
| 15 | Lamelle | 32 | Einsatzhälfte |
| 16 | Rückseite | | |

## Patentansprüche

1. Leitungsdurchführung (1) zum Durchführen mindestens einer Leitung durch eine Wand mit
a. einem Gehäuse (2) mit einer sich in eine axiale Richtung von einem vorderseitigen Ende (4) zu einem rückseitigen Ende (5) erstreckenden röhrenförmigen Aussenschale (3), und
b. einem innerhalb der Aussenschale (3) des Gehäuses (2) angeordneten Einsatz (6) mit mindestens einer Dichtmembran (7), welche eine Durchführöffnung (8) zum Durchführen einer Leitung umgibt, und
c. die mindestens eine Dichtmembran (7) jeweils von einer röhrenförmigen Innenschale (9) des Einsatzes (6) umgeben ist, welche sich in die axiale Richtung und zumindest bereichsweise entlang der Aussenschale (3) des Gehäuses (2) erstreckt, und **dadurch gekennzeichnet, dass**
d. das Gehäuse (2) sich durch die Aussenschale (3) erstreckende Ausschnitte (12) aufweist, durch welche sich jeweils radial nach aussen eine Klemmrippe (13) des Einsatzes (6) erstreckt.

2. Leitungsdurchführung (1) gemäss Patentanspruch 1, **dadurch gekennzeichnet, dass** der Einsatz (6) zumindest bereichsweise ein intumeszierendes Material umfasst.

3. Leitungsdurchführung (1) gemäss einem der vorangehenden Patentansprüche, **dadurch gekennzeichnet, dass** der Einsatz (6) zumindest bereichsweise ein weichelastisches Material umfasst.

4. Leitungsdurchführung (1) gemäss Patentanspruch 3, **dadurch gekennzeichnet, dass** die mindestens eine Dichtmembran (7) derart ausgelegt ist, dass die jeweilige Durchführöffnung (8) aufweitbar ist um sich flexibel an einen jeweiligen Leitungsdurchmesser der eingeführten Leitung anzupassen.

5. Leitungsdurchführung (1) gemäss einem der vorangehenden Patentansprüche, **dadurch gekennzeichnet, dass** die mindestens eine Dichtmembran (7) in axialer Richtung zumindest bereichsweise konisch oder trichterförmig ausgestaltet ist.

6. Leitungsdurchführung (1) gemäss einem der vorangehenden Patentansprüche, **dadurch gekennzeichnet, dass** sich die mindestens eine Dichtmembran (7) in axialer Richtung von dem vorderseitigen Ende (4) weg oder zu dem vorderseitigen Ende (4) hin konisch verjüngt.

7. Leitungsdurchführung (1) gemäss einem der vorangehenden Patentansprüche, **dadurch gekennzeichnet, dass** die jeweilige Durchführöffnung (8) in einem initialen Zustand vor dem Durchführen der jeweiligen Leitung von einem heraustrennbaren und/oder herausstechbaren Bereich (11) verschlossen ist.

8. Leitungsdurchführung (1) gemäss einem der vorangehenden Patentansprüche, **dadurch gekennzeichnet, dass** die mindestens eine Dichtmembran (7) mehrere zu der jeweiligen Durchführöffnung (8) hinlaufende Dünnstellen (14) aufweist, welche derart ausgelegt sind, dass diese in Abhängigkeit eines Leitungsdurchmessers der eingeführten Leitung einreissen.

9. Leitungsdurchführung (1) gemäss Patentanspruch 8, **dadurch gekennzeichnet, dass** die mehreren Dünnstellen (14) die mindestens eine Dichtmembran (7) in mehrere, vorzugsweise dreieckige oder trapezförmige, Lamellen (15) unterteilt.

10. Leitungsdurchführung (1) gemäss Patentanspruch 9, **dadurch gekennzeichnet, dass** neben der mindestens einen Dichtmembran (7) an der Innenschale (9) eine umlaufende Kerbe angeordnet ist, welche derart ausgelegt ist, dass diese eine Verformung der entsprechenden Dichtmembran (7), insbesondere der Lamellen (15), beim Durchführen der jeweiligen Leitung ermöglicht.

11. Leitungsdurchführung (1) gemäss einem der vorangehenden Patentansprüche, **dadurch gekennzeichnet, dass** das Gehäuse (2) einen am vorderseitigen Ende (4) seitlich von der Aussenschale (3) abragenden Rand (18) zur Auflage an der Wand umfasst.

12. Leitungsdurchführung (1) gemäss einem der vorangehenden Patentansprüche, **dadurch gekennzeichnet, dass** die Leitungsdurchführung (1) zwei Halbschalen (19, 20) umfasst, welche entlang einer sich in die axiale Richtung durch die Leitungsdurchführung (1) erstreckenden ersten Trennebene (21) miteinander wirkverbindbar sind.

13. Leitungsdurchführung (1) gemäss Patentanspruch 12, **dadurch gekennzeichnet, dass** sich die erste Trennebene (21) durch die mindestens eine Durchführöffnung (8), vorzugsweise durch zwei Durchführöffnungen (8), erstreckt.

14. Leitungsdurchführung (1) gemäss Patentanspruch 12 oder 13, **dadurch gekennzeichnet, dass** die Halbschalen (19, 20) jeweils mindestens zwei Segmente (23, 24) umfassen, welche entlang einer sich in die axiale Richtung durch die Leitungsdurchführung (1) erstreckenden zweiten Trennebene (25) wirkverbindbar sind.

15. Leitungsdurchführung (1) gemäss Patentanspruch 14, **dadurch gekennzeichnet, dass** sich die zweite Trennebene (25) durch die jeweilige Durchführöffnung (8), vorzugsweise durch zwei Durchführöffnungen (8), erstreckt.

## Claims

1. Line feedthrough (1) for feeding at least one line through a wall, with
a. a housing (2) with a tube-shaped outer shell (3) extending in an axial direction from a front side end (4) to a rear side end (5), and
b. an insert (6) arranged inside the outer shell (3) of the housing (2) and having at least one sealing membrane (7) which surrounds a feed-through opening (8) for feeding through a line, and
c. the at least one sealing membrane (7) is surrounded by a tube-shaped inner shell (9) of the insert (6), which extends in the axial direction and at least in some areas along the outer shell (3) of the housing (2), and **characterized in that**
d. the housing (2) has cut-outs (12) extending through the outer shell (3), through each of which a clamping rib (13) of the insert (6) extends radially outwards.

2. Line feedthrough (1) according to patent claim 1, **characterized in that** the insert (6) comprises an intumescent material at least in some regions.

3. Line feedthrough (1) according to one of the preceding patent claims, **characterized in that** the insert (6) comprises a soft elastic material at least in some regions.

4. Line feedthrough (1) according to patent claim 3, **characterized in that** the at least one sealing membrane (7) is designed such that the respective feed-through opening (8) is expandable in order to adapt flexibly to a respective line diameter of the inserted line.

5. Line feedthrough (1) according to one of the preceding patent claims, **characterized in that** the at least one sealing membrane (7) is conical or funnel-shaped in the axial direction, at least in some regions.

6. Line feedthrough (1) according to one of the preceding patent claims, **characterized in that** the at least one sealing membrane (7) tapers conically in the axial direction away from the front side end (4) or towards the front side end (4).

7. Line feedthrough (1) according to one of the preceding patent claims, **characterized in that** the respective feed-through opening (8) is closed in an initial state, before the respective line is fed through, by a detachable and/or pierceable region (11).

8. Line feedthrough (1) according to one of the preceding patent claims, **characterized in that** the at least one sealing membrane (7) has a plurality of thinner areas (14) running towards the respective feed-through opening (8), which are designed such that they tear depending on the diameter of the line of the line introduced.

9. Line feedthrough (1) according to claim 8, **characterized in that** the plurality of thinner areas (14) subdivides the at least one sealing membrane (7) into a plurality of preferably triangular or trapezoidal lamellae (15).

10. Line feedthrough (1) according to patent claim 9, **characterized in that** a circumferential notch is arranged on the inner shell (9) adjacent to the at least one sealing membrane (7), which is designed such that it allows the corresponding sealing membrane (7), in particular the lamellae (15), to be deformed when the respective line is fed through.

11. Line feedthrough (1) according to one of the preceding patent claims, **characterized in that** the housing (2) comprises an edge (18) at the front side end (4) laterally protruding from the outer shell (3) for resting on the wall.

12. Line feedthrough (1) according to one of the preceding patent claims, **characterized in that** the line feedthrough (1) comprises two half shells (19, 20) which can be interconnected along a first separation plane (21) extending in the axial direction through the line feedthrough (1).

13. Line feedthrough (1) according to patent claim 12, **characterized in that** the first separation plane (21) extends through the at least one feed-through opening (8), preferably through two feed-through openings (8).

14. Line feedthrough (1) according to patent claim 12 or 13, **characterized in that** the half shells (19, 20) each comprise at least two segments (23, 24) which are interconnectable along a second separation plane (25) extending in the axial direction through the line feedthrough (1).

15. Line feedthrough (1) according to claim 14, **characterized in that** the second separation plane (25) extends through the respective feed-through opening (8), preferably through two feed-through openings (8).

## Revendications

1. Traversée de ligne (1) pour traverser au moins une ligne à travers une paroi, comprenant
a. un boîtier (2) avec une coque extérieure tubulaire (3) s'étendant dans une direction axiale d'une extrémité avant (4) à une extrémité arrière (5), et
b. un insert (6) disposé à l'intérieur de la coque extérieure (3) du boîtier (2) et comportant au moins une membrane d'étanchéité (7) qui entoure une ouverture de traversée (8) pour la traversée d'une ligne, et
c. l'au moins une membrane d'étanchéité (7) est entourée respectivement par une coque intérieure tubulaire (9) de l'insert (6), qui s'étend dans la direction axiale et au moins par zones le long de la coque extérieure (3) du boîtier (2), et **caractérisé en ce que**
d. le boîtier (2) présente des découpes (12) s'étendant à travers la coque extérieure (3), à travers lesquelles s'étend respectivement radialement vers l'extérieur une nervure de serrage (13) de l'insert (6).

2. Traversée de ligne (1) selon la revendication 1, **caractérisé en ce que** l'insert (6) comprend au moins par zones un matériau intumescent.

3. Traversée de ligne (1) selon l'une des revendications précédentes, **caractérisé en ce que** l'insert (6) comprend au moins par zones un matériau élastique souple.

4. Traversée de ligne (1) selon la revendication 3, **caractérisé en ce que** l'au moins une membrane d'étanchéité (7) est conçue de telle sorte que l'ouverture de traversée (8) respective peut être élargie pour s'adapter de manière flexible à un diamètre de ligne respectif du ligne introduite.

5. Traversée de ligne (1) selon l'une des revendications précédentes, **caractérisé en ce que** la au moins une membrane d'étanchéité (7) est conçue en direction axiale au moins par zones en forme de cône ou d'entonnoir.

6. Traversée de ligne (1) selon l'une des revendications précédentes, **caractérisé en ce que** la au moins une membrane d'étanchéité (7) se rétrécit en cône dans la direction axiale en s'éloignant de l'extrémité avant (4) ou en se rapprochant de l'extrémité avant (4).

7. Traversée de ligne (1) selon l'une des revendications précédentes, **caractérisé en ce que** l'ouverture de traversée (8) respective est fermée dans un état initial avant la traversée de la ligne respectif par une zone détachable et/ou découplable (11).

8. Traversée de ligne (1) selon l'une des revendications précédentes, **caractérisé en ce que** l'au moins une membrane d'étanchéité (7) présente plusieurs portions minces (14) s'étendant vers l'ouverture de traversée (8) respective, qui sont conçues de telle sorte que celles-ci se déchirent en fonction d'un diamètre de ligne du ligne introduit.

9. Traversée de ligne (1) selon la revendication 8, **caractérisé en ce que** la pluralité de portions minces (14) divise la au moins une membrane d'étanchéité (7) en plusieurs lamelles (15), de préférence triangulaires ou trapézoïdales.

10. Traversée de ligne (1) selon la revendication 9, **caractérisé en ce qu'**à côté d'au moins une membrane d'étanchéité (7), une encoche circulaire est arrangée sur la coque intérieure (9), laquelle est conçue de telle sorte qu'elle permet une déformation de la membrane d'étanchéité (7) correspondante, en particulier des lamelles (15), lors de la traversée de la ligne respectif.

11. Traversée de ligne (1) selon l'une des revendications précédentes, **caractérisé en ce que** le boîtier (2) comprend un bord (18) dépassant latéralement de la coque extérieure (3) à l'extrémité avant (4) pour s'appuyer contre le mur.

12. Traversée de ligne (1) selon l'une des revendications précédentes, **caractérisé en ce que** la traversée de ligne (1) comprend deux demi-coques (19, 20) qui sont interconnectables le long d'un premier plan de séparation (21) s'étendant dans la direction axiale à travers la traversée de ligne (1).

13. Traversée de ligne (1) selon la revendication 12, **caractérisé en ce que** le premier plan de séparation (21) s'étend à travers au moins une ouverture de traversée (8), de préférence à travers deux ouvertures de traversée (8).

14. Traversée de ligne (1) selon la revendication 12 ou 13, **caractérisé en ce que** les demi-coques (19, 20) comprennent chacune au moins deux segments (23, 24) qui sont interconnectables le long d'un deuxième plan de séparation (25) s'étendant dans la direction axiale à travers la traversée de ligne (1).

15. Traversée de ligne (1) selon la revendication 14, **caractérisé en ce que** le deuxième plan de séparation (25) s'étend à travers l'ouverture de traversée (8) respective, de préférence à travers deux ouvertures de traversée (8).
